# EUROPÄISCHE PATENTANMELDUNG

(11) **EP 1 826 246 A2**
(43) Veröffentlichungstag der Anmeldung: **29.08.2007**
(21) Anmeldenummer: 07003503.5
(22) Anmeldetag: 20.02.2007
(51) Int. Cl.: C09C 1/26

(54) **Druckfarbe für den Sicherheitsdruck**

(30) Priorität: 22.02.2006 DE 102006008244
(71) Anmelder: Giesecke & Devrient GmbH, 81677 München (DE)
(72) Erfinder: Schiffmann, Peter, 85354 Freising (DE); Karcher, Lars, 82140 Olching (DE)

(57) **Zusammenfassung**

Die Erfindung betrifft ein modifiziertes Eisenblau-Pigment. Erfindungsgemäß ist das Eisenblau-Pigment (22) mit einer alkali- und/ oder säurebeständigen Hülle (24) beschichtet.

## Beschreibung

Die Erfindung betrifft ein modifiziertes Eisenblau-Pigment, eine Druckfarbe für den Sicherheitsdruck, ein Verfahren zur Herstellung eines solchen Pigmentes sowie ein mit der Druckfarbe bedrucktes Wertdokument.

Wertdokumente, wie beispielsweise Banknoten, Aktien, Anleihen, Urkunden, Gutscheine, Schecks, hochwertige Eintrittskarten, aber auch andere fälschungsgefährdete Papiere, wie Pässe oder sonstige Ausweisdokumente, werden zur Absicherung oft mit einem Sicherheitsdruck ausgestattet, der eine Überprüfung der Echtheit des Wertdokuments gestattet und der zugleich als Schutz vor unerlaubter Reproduktion dient.

Von Herstellern von Sicherheitsdruckfarben werden für diesen Zweck seit längerem Eisenblau-Pigmente, insbesondere Miloriblau, als Infrarot-Absorber eingesetzt. Miloriblau-Pigment zeigt jedoch erhebliche Schwächen in den Alkalibeständigkeiten, einschließlich der Waschmaschinenbeständigkeit. Auch die Umhüllung mit alkalibeständigen Bindemitteln aus der Druckfarbe, beispielsweise bei Simultan-/Stichdruckfarben auf Basis pflanzlicher Öle und Alkyde, führt wegen Fehlstellen bzw. Kapillaren im getrockneten Bindemittel nicht zu einer ausreichenden chemischen Beständigkeit.

Ausgehend davon liegt der Erfindung die Aufgabe zugrunde, ein Pigment und eine Druckfarbe der eingangs genannten Art anzugeben, die die Nachteile des Standes der Technik vermeiden. Insbesondere soll die chemische Beständigkeit der im Sicherheitsdruck als Infrarot-Absorber eingesetzten Eisenblau-Pigmente erhöht werden.

Diese Aufgabe wird durch die modifizierten Pigmente, die Druckfarbe und das Herstellungsverfahren sowie das Wertdokument mit den Merkmalen der unabhängigen Ansprüche gelöst. Weiterbildungen der Erfindung sind Gegenstand der Unteransprüche.

Nach der Erfindung ist vorgesehen, dass das Eisenblau-Pigment einer Druckfarbe für den Sicherheitsdruck mit einer alkali- und/oder säurebeständigen Hülle beschichtet ist. Das beschichtete Eisenblau-Pigment wird als "modifiziertes" Eisenblau-Pigment bezeichnet. Die Eisenblau-Pigmente der Erfindung basieren auf einem Eisen(II)-Eisen(III)-cyanokomplex der allgemeinen Zusammensetzung M^{I}[Fe^{II}Fe^{III}(CN)₆] x H₂O mit M^{I} = Kalium, Ammonium oder Natrium. Vorzugsweise handelt es sich bei dem Eisenblau-Pigment um Kalium-Eisen(II)-Eisen(III)-cyanokomplex-Pigment.

Das Eisenblau-Pigment ist in einer bevorzugten Erfindungsvariante mit einer organischen Hülle beschichtet, die insbesondere Polystyrol, SBS (Styrol/Butadien/Styrol-Triblockcopolymere), Polycarbonat, PVC (Polyvinylchlorid), TPU (thermoplastische Polyurethane), ABS (Acrylnitril-Butadien-Styrol-Copolymere) oder PMMA (Polymethylmethacrylat) enthält.

In einer anderen ebenfalls bevorzugten Erfindungsvariante ist das Eisenblau-Pigment mit einer anorganischen Hülle beschichtet, die beispielsweise auf Basis von SiOₓ gebildet sein kann. Das Eisenblau-Pigment kann auch mit zwei oder mehr unterschiedlichen organischen oder anorganischen Hüllen beschichtet sein.

Gemäß einer bevorzugten Weiterbildung der Erfindung enthält die Beschichtung einen Merkmalsstoff. Der Merkmalsstoff kann dabei in der Beschichtung in einer Konzentration zwischen 1 ppm und etwa 50 Gew-% vorliegen.

Bei dem Merkmalsstoff kann es sich um einen Lumineszenzstoff handeln, der anhand seiner Lumineszenzeigenschaften nachgewiesen werden kann. Dies kann beispielsweise mittels Lumineszenzspektrometer unter Bestimmung der Anregungspeaks, Emissionspeaks oder des Abklingverhaltens erfolgen.

Auch lösliche Stoffe können als Merkmalsstoffe in die Beschichtung eingebaut werden. Der Nachweis kann mittels Dünnschichtchromatographie, visuell oder photometrisch über den LF-Wert (Lauf-Wert: Strecke, die eine Probe auf der DC-Platte bei einem definierten Lösungs- bzw. Laufmittel in einer definierten Zeit zurücklegt), Intensität und verwendete Lösungsmittelqualität erfolgen. Infrage kommen hier insbesondere visuell sichtbare Farbstoffe, Lumineszenzstoffe, IR-Absorber oder aktivierbare Stoffe (Reagenzien).

In weiteren Varianten können auch über eine Formerkennung mittels Rasterelektronenmikroskop nachweisbare Merkmalsstoffe, wie etwa Bariumsulfat oder Kreide, verwendet werden, oder lichtpolarisierende Merkmalsstoffe, die mittels Lichtmikroskop und Polarisationsfilter nachgewiesen werden können. Dabei kommen insbesondere flüssigkristalline Materialien in Betracht, die sogar alleine als organische Hülle dienen können.

IR-Absorber als Merkmalsstoffe in der Hülle können mittels Lichtmikroskop im IR-Bereich, Mikroskopspektrometer oder Spektroskopie nachgewiesen werden. Auch Merkmalsstoffe mit magnetisch nachweisbaren Eigenschaften, beispielsweise Weicheisen (Carbonyleisen, Fe₂O₃) oder Harteisen (Magnetit Fe₃O₄), kommen in Betracht, der Nachweis gelingt hier beispielsweise mittels Vibration Sample Magnetometer.

Elektrisch leitfähige Merkmalsstoffe in der Hülle, wie etwa Kohlenstoff, Silber, Gold, Kupfer oder dotierte organische Polymere, können durch eine Messung des Oberflächenwiderstands oder der Leitfähigkeit abgelösten Pigmentmaterials nachgewiesen werden. Auch weitere Merkmalsstoffe mit speziellen Eigenschaften, die mittels REM, Röntgenmikroanalyse oder Massenspektrometrie nachgewiesen werden können, wie spezielle Oxide, Metalle oder seltene Erden, kommen für die Erfindung in Betracht.

Die Erfindung enthält auch eine Druckfarbe für den Sicherheitsdruck sowie ein Verfahren zum Herstellen des Eisenblau-Pigments, bei dem die Pigmente mit einer alkali- und/oder säurebeständigen Hülle beschichtet werden.

In einer vorteilhaften Verfahrensvariante werden die Eisenblau-Pigmente mit einer organischen Hülle beschichtet. Dabei kann eine aus einer Reihe möglicher Beschichtungsvarianten zum Einsatz kommen. Die Beschichtung kann beispielsweise mittels Emulsionspolymerisation erfolgen, wobei wasserunlösliche Monomere mithilfe von Emulgatoren in Wasser emulgiert und unter Verwendung wasserlöslicher Initiatoren polymerisiert werden.

In einer anderen Beschichtungsvariante erfolgt die Beschichtung durch a) Lösen oder Dispergieren der zu beschichtenden Polymere in Lösungsmittel, b) Mischen mit dem Eisenblau-Pigment, c) Abdampfen des Lösungsmittels bzw. Erstarren und d) trocken Vermahlen. Bei thermoplastischen oder aufschmelzbaren Polymeren kann nach dem Schritt d) ein Temperschritt zum Verschließen eventueller Kapillaren durchgeführt werden. Als Polymere kommen für diese Verfahrensvariante insbesondere die oben erwähnten Polymere in Betracht.

Die Beschichtung kann auch erfolgen durch a) In-Lösung-Bringen der zu beschichtenden Polymere und einem Vernetzer, b) Einmischen des Eisenblau-Pigments, c) Vernetzen, d) Trocknen und Vermahlen. Für diese Variante kommen insbesondere Harze aus der Gruppe der Diallylphthalate, Epoxid-, Harnstoff-Formaldehyd-, Melamin-Formaldehyd-, Melamin-Phenol-Formaldehyd-, Phenol-Formaldehyd-, oder ungesättigter Polyester-Harze in Frage.

Nach einer weiteren Beschichtungsvariante erfolgt die Beschichtung durch a) In-Schmelze-Bringen der zu beschichtenden Polymere (beispielsweise sogenannte "Hotmelts", Polyamid, TPU) und gegebenenfalls eines Vernetzers, wie etwa Isocyanat, b) Einmischen des Eisenblau-Pigments, c) Vernetzen, d) Trocknen und Vermahlen.

In einer alternativen Ausgestaltung werden die Eisenblau-Pigmente über ein Sol-Gel-Verfahren mit einer anorganischen Hülle versehen. Dazu werden beispielsweise in einem organischen Lösungsmittel durch Katalyse teilweise organisch funktionalisierte Silane mittels Säure oder Base hydrolysiert. Das Eisenblau-Pigment wird mit SiOₓ umhüllt, die wässrigen Komponenten abgedampft. Ein Temper- bzw. Sinterschritt erfolgt unter Rühren bzw. Mischen um ein Agglomerat zu vermeiden.

Zur Herstellung der erfindungsgemäßen Druckfarbe werden die modifizierten Eisenblau-Pigmente in ein geeignetes Bindemittel eingebracht.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig. 1: eine schematische Darstellung einer mit einer erfindungsgemäßen Druckfarbe bedruckten Banknote, und
- Fig. 2 und 3: schematisch gekapselte Farbpigmente nach Ausführungsbeispielen der Erfindung.

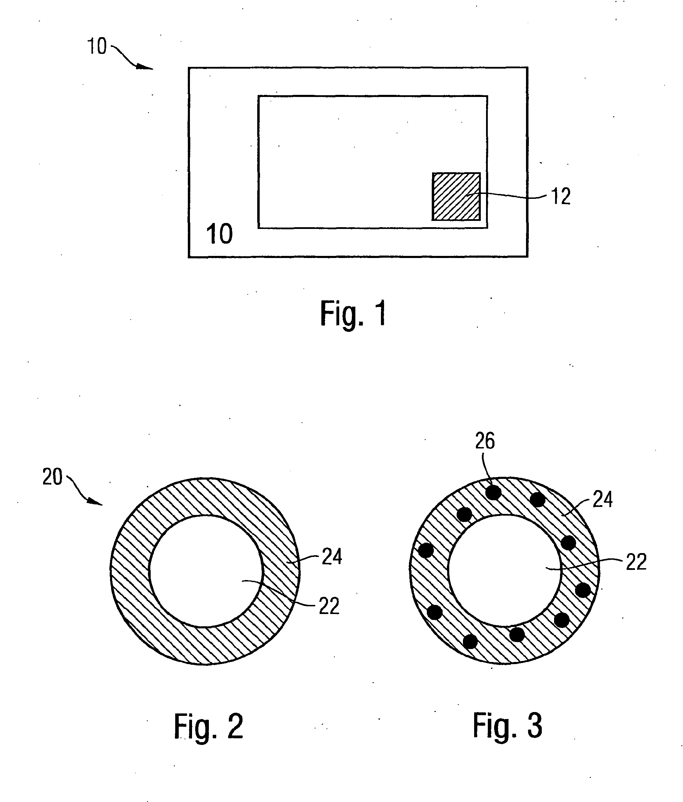

Die Erfindung wird nun am Beispiel einer Banknote erläutert. Fig. 1 zeigt dazu eine schematische Darstellung einer Banknote 10, die in einem Bereich 12 mit einer erfindungsgemäßen Druckfarbe bedruckt ist. Der Druck erfolgt vorzugsweise mittels Stichtiefdruck- oder Offsetdruckverfahren.

Wie in Fig. 2 schematisch illustriert, enthält die erfindungsgemäße Druckfarbe verkapselte Farbpigmente 20, bei denen Eisenblau-Pigmente 22 mit einer alkali- und/oder säurebeständigen Hülle 24 beschichtet sind. Die Eisenblau-Pigmente 22 basieren auf einem Eisen(II)-Eisen(III)-cyanokomplex der allgemeinen Zusammensetzung M^{I}[Fe^{II}Fe^{III}(CN)₆] x H₂O mit M^{I} = Kalium, Ammonium oder Natrium, wobei für die Erfindung insbesondere Miloriblau mit M^{I} = Kalium von Interesse ist.

Im Ausführungsbeispiel ist ein Miloriblau-Pigment 22 mit einer alkalibeständigen und undurchlässigen organischen Hülle 24 beschichtet, um die Beständigkeit der Druckfarbe bzw. des Sicherheitsdrucks im Bereich 12 zu erhöhen.

Dazu wird beispielsweise ein Polymer bzw. Prepolymer, etwa ein Melamin/Formaldehyd-Harz unter kräftigem Rühren in Wasser dispergiert und eine 10%-ige wässrige Dispersion erzeugt. Anschließend wird in einem Rundkolben unter Rühren, beispielsweise mit einem Teflonrührfisch und einem Magnetrührer portionsweise Miloriblau zugegeben. Die Dispersion wird so lange gerührt, bis keine größeren Agglomerate vom Miloriblau mehr zu sehen sind. Anschließend wird unter Vakuum und ständigem Rühren langsam das Lösungsmittel Wasser abdestilliert. Der Feststoff wird von Hand zerkleinert und zum vollständigen Vernetzen des Polymers 2 Stunden bei 120 °C in einen Umluftheizofen gegeben. Durch das Erhitzen des Stoffes erfolgt gleichzeitig die Trocknung der verkapselten Teilchen. Anschließend kann das Produkt wie ein herkömmliches Pigment zu einer Druckfarbe weiterverarbeitet werden.

In einer alternativen Ausgestaltung wird das Miloriblau-Pigment 22 über ein Sol-Gel-Verfahren mit einer anorganischen Hülle 24 versehen. Dazu werden beispielsweise in einem organischen Lösungsmittel durch Katalyse teilweise organisch funktionalisierte Silane mittels Säure oder Base hydrolysiert. Das Miloriblau-Pigment wird mit SiOₓ umhüllt, die wässrigen Komponenten abgedampft. Ein Temper- bzw. Sinterschritt erfolgt unter Rühren bzw. Mischen um ein Agglomerat zu vermeiden.

Wie in Fig. 3 gezeigt, kann der Beschichtung 24 kann auch ein forensisch nachweisbarer Merkmalsstoff 26 zugesetzt werden, um die Sicherheit des Aufdrucks 12 zu erhöhen. Im Ausführungsbeispiel der Fig. 3 ist der oben beschriebenen organischen Hülle 24 ein Lumineszenzstoff 26 beigemischt, beispielsweise der nach UV-Anregung orange fluoreszierende Stoff LUMILUX® CD 135 von Honeywell (Zusammensetzung: ZnS:Mn) oder der nach UV-Anregung gelblich grün phosphoreszierende Stoff LUMILUX® CD 140 von Honeywell (Zusammensetzung: ZnS:Cu).

Es können auch über eine Formerkennung mittels Rasterelektronenmikroskop nachweisbare Merkmalsstoffe, wie etwa Bariumsulfat oder Kreide, verwendet werden, oder IR-Absorber, wie etwa ADS1065A von American Dye Source (Zusammensetzung: C₆₂H₉₂N₆F₁₂Sb₂). Auch Merkmalsstoffe mit magnetisch nachweisbaren Eigenschaften, beispielsweise Weicheisen (Carbonyleisen, Fe₂O₃) oder Harteisen (Magnetit Fe₃O₄), kommen in Betracht. Elektrisch leitfähige Merkmalsstoffe, wie etwa Kohlenstoff, Silber, Gold, Kupfer oder dotierte organische Polymere, können durch eine Messung des Oberflächenwiderstands oder der Leitfähigkeit abgelösten Pigmentmaterials nachgewiesen werden.

Die Konzentration derartiger Merkmalsstoffe kann von wenigen ppm bis hin zu etwa 50 Gew-% der Beschichtung reichen. Aus Kostengründen und um die Erkennung durch potentielle Fälscher zu erschweren, werden meist geringe Konzentrationen eingesetzt.

## Patentansprüche

1. Modifiziertes Eisenblau-Pigment, **dadurch gekennzeichnet, dass** ein Eisenblau-Pigment mit einer alkali- und/ oder säurebeständigen Hülle beschichtet ist.

2. Pigment nach Anspruch 1, **dadurch gekennzeichnet, dass** das Eisenblau-Pigment ein Kalium-Eisen(II)-Eisen(III)-cyanokomplex-Pigment ist.

3. Pigment nach Anspruch 1 oder 2, **dadurch gekennzeichnet, dass** das Eisenblau-Pigment mit einer organischen Hülle beschichtet ist.

4. Pigment nach Anspruch 3, **dadurch gekennzeichnet, dass** die organische Hülle Polystyrol, SBS, Polycarbonat, PVC, TPU, ABS oder PMMA enthält.

5. Pigment nach Anspruch 1 oder 2, **dadurch gekennzeichnet, dass** das Eisenblau-Pigment mit einer anorganischen Hülle beschichtet ist.

6. Pigment nach Anspruch 4, **dadurch gekennzeichnet, dass** die anorganische Hülle auf Basis von SiOₓ gebildet ist.

7. Pigment nach wenigstens einem der Ansprüche 1 bis 4, **dadurch gekennzeichnet, dass** die Beschichtung einen Merkmalsstoff enthält.

8. Pigment nach Anspruch 7, **dadurch gekennzeichnet, dass** der Merkmalsstoff in der Beschichtung in einer Konzentration zwischen 1 ppm und 50 Gew-% vorliegt.

9. Pigment nach Anspruch 7 oder 8, **dadurch gekennzeichnet, dass** der Merkmalsstoff ein Lumineszenzstoff ist.

10. Pigment nach Anspruch 7 oder 8, **dadurch gekennzeichnet, dass** der Merkmalsstoff ein löslicher Stoff, insbesondere ein aktivierbarer Stoff ist.

11. Pigment nach Anspruch 7 oder 8, **dadurch gekennzeichnet, dass** der Merkmalsstoff spezifische Formkörper enthält.

12. Pigment nach Anspruch 7 oder 8, **dadurch gekennzeichnet, dass** der Merkmalsstoff lichtpolarisierend ist.

13. Pigment nach Anspruch 7 oder 8, **dadurch gekennzeichnet, dass** der Merkmalsstoff ein Infrarotabsorber ist.

14. Pigment nach Anspruch 7 oder 8, **dadurch gekennzeichnet, dass** der Merkmalsstoff magnetisch ist.

15. Pigment nach Anspruch 7 oder 8, **dadurch gekennzeichnet, dass** der Merkmalsstoff elektrisch leitfähig ist.

16. Verfahren zum Herstellen eines modifizierten Eisenblau-Pigments, bei dem Eisenblau-Pigmente mit einer alkali- und/ oder säurebeständigen Hülle beschichtet werden.

17. Verfahren nach Anspruch 16, **dadurch gekennzeichnet, dass** die Eisenblau-Pigmente mit einer organischen Hülle beschichtet werden.

18. Verfahren nach Anspruch 17, **dadurch gekennzeichnet, dass** die Beschichtung mittels Emulsionspolymerisation erfolgt.

19. Verfahren nach Anspruch 17, **dadurch gekennzeichnet, dass** die Beschichtung erfolgt durch a) Lösen oder Dispergieren der zu beschichtenden Polymere in Lösungsmittel, b) Mischen mit den Eisenblau-Pigmenten, c) Abdampfen des Lösungsmittels bzw. Erstarren und d) trocken Vermahlen.

20. Verfahren nach Anspruch 19, **dadurch gekennzeichnet, dass** das zu beschichtende Polymer thermoplastisch ist oder aufgeschmolzen werden kann und dass nach dem Schritt d) ein Temperschritt zum Verschließen eventueller Kapillaren durchgeführt wird.

21. Verfahren nach Anspruch 17, **dadurch gekennzeichnet, dass** die Beschichtung erfolgt durch a) In-Lösung-Bringen der zu beschichtenden Polymere und einem Vernetzer, b) Einmischen der Eisenblau-Pigmente, c) Vernetzen, d) Trocknen und Vermahlen.

22. Verfahren nach Anspruch 17, **dadurch gekennzeichnet, dass** die Beschichtung erfolgt durch a) In-Schmelze-Bringen der zu beschichtenden Polymere und gegebenenfalls eines Vernetzers, b) Einmischen der Eisenblau-Pigmente, c) Vernetzen, d) Trocknen und Vermahlen.

23. Verfahren nach Anspruch 16, **dadurch gekennzeichnet, dass** die Eisenblau-Pigmente in einem Sol-Gel-Verfahren mit einer anorganischen Hülle beschichtet werden.

24. Druckfarben für den Sicherheitsdruck, umfassend ein modifiziertes Eisenblau-Pigment nach wenigstens einem der Ansprüche 1 bis 15.

25. Wertdokument mit einem Aufdruck, **dadurch gekennzeichnet, dass** der Aufdruck mit einer Druckfarbe nach Anspruch 24 ausgeführt wurde.
